(19) Europäisches Patentamt
European Patent Office
Office européen des brevets

(11) EP 2 498 927 B1

(12) EUROPEAN PATENT SPECIFICATION

(45) Date of publication and mention of the grant of the patent:
**04.09.2013 Bulletin 2013/36**

(21) Application number: **10807717.3**

(22) Date of filing: **09.11.2010**

(51) Int Cl.:
***B09C 1/06*** *(2006.01)*

(86) International application number:
**PCT/IB2010/002884**

(87) International publication number:
**WO 2011/058422 (19.05.2011 Gazette 2011/20)**

# (54) METHOD FOR SEQUESTERING ORGANIC CARBON IN SOIL

VERFAHREN ZUR SEQUESTRIERUNG VON ORGANISCHEM KOHLENSTOFF IM ERDBODEN

PROCÉDÉ POUR SÉQUESTRER LE CARBONE ORGANIQUE DANS LE SOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2009 IT MI20091973**

(43) Date of publication of application:
**19.09.2012 Bulletin 2012/38**

(73) Proprietor: **Centro Di Ricerca Interdipartimentale Sulla Risonanza Magnetica Nucleare Per L'Ambiente, L'Agro-Alimentare Ed I Nuovi Materiali-**
**80055 Portici (NA) (IT)**

(72) Inventor: **PICCOLO, Alessandro**
**I-80055 Portici (NA) (IT)**

(74) Representative: **Bottero, Carlo et al**
**Barzanò & Zanardo Milano S.p.A.**
**Via Borgonuovo, 10**
**20121 Milano (IT)**

(56) References cited:
**WO-A1-03/068324**
**JP-A- 2003 145 127**
**US-A1- 2005 177 018**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 498 927 B1

## Description

The present invention relates to the use of a catalyst comprising a hydrosoluble complex of the metal-porphynine and/or the metal-phtalocyanine type for sequestering organic carbon in soil. In particular, the present invention concerns the said use for sequestering organic carbon in soil, in order to mitigate the emission of $CO_2$ naturally produced by the soil. Said use increases the content of chemical energy in the natural organic molecules present in soil by means of an *in situ* photo-oxidative catalyzed polymerization, and limits their biodegradation.

The pool of organic compounds found in soil, resulting from the processes of decomposition and biological degradation of plant and animal material, and microbial catabolism, is generally referred to with the term "humus". Humus is formed by cellular biomolecules, such as proteins, peptides, carbohydrates, fatty acids, by their degradation products, and also by lignin degradation byproducts, such as phenolic and benzene-carboxylic acids. Such molecules have individually a molecular weight generally lower than 1000 Da.

Humus is present in variable amount and composition in soils, marine sediments, coal deposits, and terrestrial and marine waters. Its importance in the biosphere in maintaining the planet ecological balance is comparable to that of photosynthesis and atmospheric nitrogen fixation processes. In fact, it is the constant process of humus mineralization, namely transformation of humus carbon-containing organic compounds in $CO_2$, that mainly sustains the biogeochemical carbon cycling, by re-emitting in the atmosphere the $CO_2$ that is fixed in plants through photosynthesis.

Phenomena such as deforestation and intensive soil exploitation under industrial agriculture, however, have resulted in the intensification of soil organic carbon mineralization process, thus increasing the atmospheric content of $CO_2$, that is one of the gases responsible of increasing the greenhouse effect. Globally, the release of carbon as $CO_2$ from the planet soils (known as "soil respiration") is estimated to be around $8x10^{14}$ g C/year (Paustian et al., 1997).

The concentration of $CO_2$ in the atmosphere increases at a rate of about 2.8 Gt (Gigatons) of C per year. Anthropogenic $CO_2$, due mainly to fossil fuel combustion, is released in the atmosphere at the greater rate of about 6 GtC/year. The difference between the amount of $CO_2$ released in atmosphere and the observed increase of its concentration is due to mechanisms of anthropogenic back-fixation in terrestrial ecosystems (Schimel et al., 1995). In fact, as opposed to 120 GtC/year globally fixed by photosynthesis, the respiration of plants and soils, each contributing with 60 GtC/year, maintain the global balance of $CO_2$ in the atmosphere.

Given this situation, it becomes evident that small variations in decomposition rate of soil organic carbon could influence significantly the concentration of atmospheric $CO_2$. Therefore, by acting on the mechanisms of soil organic carbon fixation and/or sequestration, it is possible to significantly influence the global equilibrium of the carbon biogeochemical cycle.

In the state of the art, one of the methods to decrease $CO_2$ and other greenhouse gases in the atmosphere is based on carbon fixation in biomasses.

To this purpose, forest management practices have been developed to increase the amount of carbon that can be subtracted from the natural biogeochemical cycle and permanently fixed in plants, especially in woody species. Such biomasses are then natural carbon sinks. It is known, however, that net carbon fixation in biomasses ends as trees reach full maturity.

Moreover, specific practices have been applied to crop agriculture by limiting the depth of soil plowing to no more than 10 cm *(minimum tillage)* or none (*zero tillage*), in order to reduce or inhibit microbial mineralization of humus. Even though the carbon sequestration rate of such practices is limited (<0.5 t $Ha^{-1}$ $year^{-1}$) and yet to be indisputably and scientifically proved, the possible sequestered carbon in soil is rapidly released again, as soon as the soil is returned to be plowed at the traditional conditions (30-40 cm).

Soils potentially represent the greatest organic carbon sink in nature. It is estimated to contain about 1500 Gt of carbon, almost twice as that present in atmosphere and thrice as that sequestered by plants. In relation to this potential, it would be therefore desirable to permanently sequester carbon in soil or, at least, to enhance the residence time of carbon in soil within the biogeochemical cycle.

JP 2003 145127 discloses a method for removing hardly-decomposable aromatic halogenated substances from a soil using a metal complex compound of an iron group element (for example, iron) and a nitrogen-containing organic ligand (for example, porphyrin). The method comprises the step of spraying a solution of the metal complex compound in solvent such as water, ethanol, methanol or acetonitrile onto the soil.

WO 03068324 discloses a method for destroying contaminants such as PAH's in sludge by targeting the generation of reactive species such as hydroxy radical at the site where it is needed. The method comprises the steps of (a) contacting the sludge with a first fluid that comprises a hydrophobic catalyst, the catalyst being able to partition into the sludge target volume; (b) contacting the sludge with a second fluid that comprises at least one compound that can react with the catalyst from step (a) to destroy an organic molecule in the sludge.

The present invention has the aim to overcome the aforementioned drawbacks of the state of the art..

An objective of the present invention is the use of a catalyst comprising a hydrosoluble complex of the metal-porphyrine and/or metal-phtalocyanine type for sequestering organic carbon in soil, according to claim 1.

The present invention allows to permanently sequester organic carbon which is present in a soil, or at least to hold it for a longer time period than that permitted by the natural soil biogeochemical equilibrium. The present invention may be applied to mitigate $CO_2$ emissions naturally produced by a soil.

The applicant has surprisingly discovered that it is possible to sequester carbon in soils in greater amount and for longer time than as obtainable by the state-of-the-art agronomic sequestering techniques, by increasing the content of chemical energy of the molecules composing humus through the formation of intermolecular covalent bonds among them. Establishing these bonds among humic molecules *in situ* in soil enhances the energetic threshold needed to initiate microbial degradation, thereby resulting in a reduction of the carbon amount potentially mineralizable in $CO_2$.

Organic carbon sequestration in soil is attained through the photo-oxidative polymerization of the organic substances composing soil humus (humic molecules). Humus polymerization is conducted *in situ* by putting in contact a soil, comprising humus, with catalysts consisting of metal-porphyrine complexes and in the presence of electromagnetic radiations with wavelengths within the ultraviolet (UV) and/or visible range, preferably in presence of radiations having wavelengths between 250 and 800 nm, more preferably between 300 and 800 nm.

In the context of the present invention the term "humus" refers to the complex of organic molecules in soil, which derive from the decomposition and biological degradation processes of plant and animal material, and from microbial catabolism. Humus comprises cellular biomolecules such as proteins, peptides, carbohydrates, fatty acids and their degradation products, lignin degradation products, such as phenolic and benzene-carboxylic acids, organic compounds having variably substituted aromatic, and even condensed, rings.

The present invention may be beneficially applied to all natural soils, namely agricultural soils, that contain humus and are either cultivated or uncultivated. Before applying it to an agricultural soil, the soil should be preferably plowed.

Porphyrines and their derivatives in complexes with metals, e.g.: metal-porphyrines and metal phthalocyanines (from now on also denominated, respectively, Me-porphyrines and Me-phthalocyanines), properly functionalized to ensure their complete hydro-solubility and employed as catalysts, are compounds known in the art. They are found in nature and/or synthesizable by synthesis processes which are known to the person skilled in the art.

With the term porphyrine, it is intended the class of organic heterocyclic compound comprising a porphyrine ring according to formula (Ia) (porphyrine)

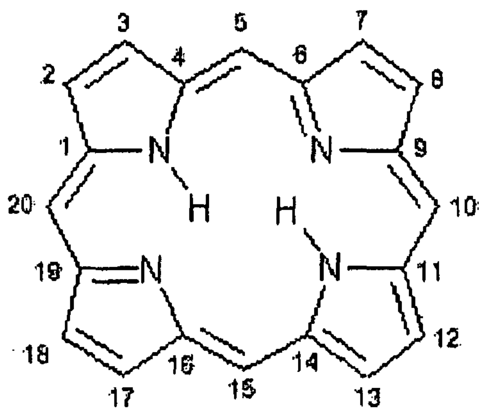

(Ia).

The porphyrine ring in the formula (I) may coordinate metal cations which are host inside the macrocycle and become coordinated by four nitrogen atoms (Me-porphyrine complexes), thereby forming compounds with the general formula (IIa)

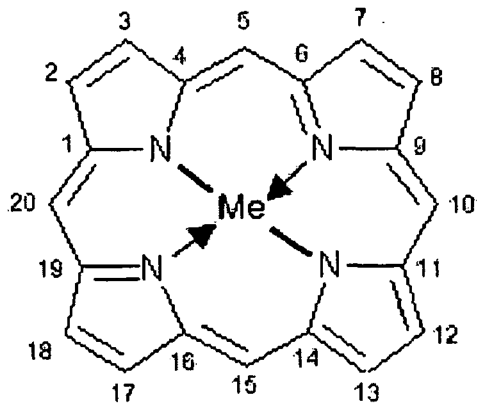

(IIa)

where Me stands for a metal cation.

With the term phthalocyanines, it is intended the class of heterocyclic organic compounds having the structural formula (Ib)

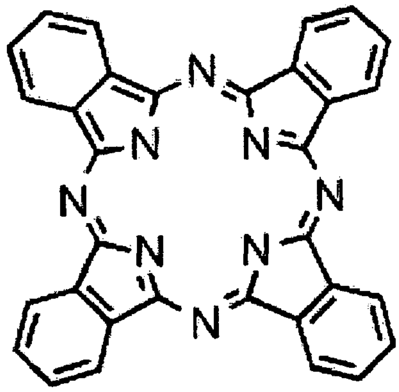

(Ib).

The structural formula (Ib) may coordinate metal cations which are host inside the macrocycle, and become coordinated by four nitrogen atoms, thereby forming Me-phthalocyanine complexes with the general formula (IIb)

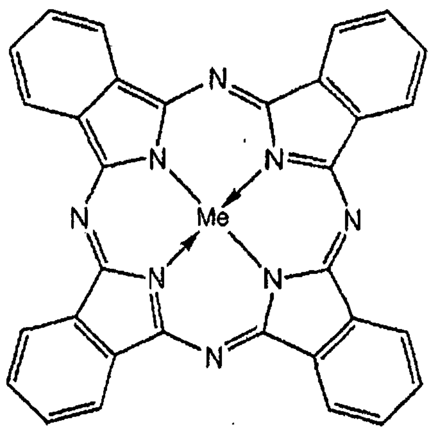

(IIb)

where Me stands for a metal cation.

Me-porphyrine and Me-phthalocyanine complexes, which can be employed in the present invention, are those having general formula (IIa) e (IIb), where Me is a metal ion selected among those of the metals belonging to the following groups and series of the elemental periodic table: group IIa, group IIIa, group IVa, group Va, group VIa, group VIIa, group VIII, group Ib, group IIb, group IIIb, series of lanthanides and series of actinides of the periodic table of elements. Preferably, the metal cation "Me" is selected from the group consisting of $Co^{2+}$, $Fe^{3+}$, $Fe^{2+}$, $Ni^{2+}$, $Cu^{2+}$, $Mo^{3+}$, $V^{5+}$, $Ca^{2+}$, $Ba^{2+}$, $Sr^{2+}$, $Cr^{3+}$, $Cr^{5+}$, $Mn^{2+}$ and $Zn^{2+}$. Preferably, Me is selected among $Co^{2+}$, $Fe^{3+}$, $Fe^{2+}$, $Mn^{2+}$, $Cu^{2+}$ and $Ni^{2+}$.

When the Me cation is a ferrous or ferric cation, formula (IIa) corresponds to the heme group, namely the prosthetic group of hemoproteins (cytochromes, hemoglobines, etc.).

The compounds with general formula (IIa) are also known as "mimetic (or biomimetic) compounds" of the heme group, being able to mimic the catalytic activity of the active sites of these metal-enzymes.

The aforementioned compounds having general formula (IIa) and (IIb) may also comprise substituent groups in the peripheral substitution positions of the porphyrine or phthalocyanine ring. In a preferable embodiment, the substituents can be hydrophilic functional groups, which are introduced to modify (increase) the solubility of the aforementioned metal complexes. It has been observed that the catalytic activity of compounds having general formula (IIa) and (IIb) increases with the increase of their solubility in water.

In order to favour dissolution in water, the Me-porphyrine and Me-phthalocyanine compounds are substituted, preferably, with hydrophilic groups selected from the group consisting of carboxyl, benzenesulfonic, chlorobenzenesulfonic, ammonium methylbenzene, peptide and carbohydrate groups. These hydrophilic groups assure the complete solubility in water of Me-porphyrine and Me-phthalocyanine compounds.

Me-porphyrine complexes with general formula (IIa) and Me-phthalocyanine complexes with general formula (IIb) may also be prepared in a dimeric or trimeric form. Dimers and trimers are more active catalysts than monomers. In a preferable embodiment, the aforementioned metal complexes, either monomeric, or dimeric, or trimeric, may as well be immobilized on silicate or alumino-silicate substrates (silica, zeolites, clay minerals), or on organic substrates (e.g.: polyethylenglycol (PEG) and its derivatives), thus forming a supported catalyst. Immobilization may be achieved either by a simple physical adsorption of the Me-porphyrine or Me-phthalocyanine complex on the substrate, or through interposition of a *spacer* (also referred to as "spacing arm") that binds the catalyst to the substrate. The spacer is a molecule having a first end consisting of a Lewis base (free end), preferably an imidazole group, and a second end (fixed end) consisting of a group capable of binding though covalent bonds to surface silanols (-SiOH) (siloxane bonds) or to surface Al hydroxides (-AlOH) of the silicate or alumino-silicate substrate. In case of organic substrates, the spacer is a molecule with one end consisting of a Lewis base (free end), preferably an imidazolic group, and the other end (fixed end) consisting of an amino group capable of binding through amide bonds to carboxyl groups of the organic substrate (for example, polyethylenglycol (PEG) derivatives, such as bis-(carboxylic acid)-polyethylenglylcol). The Me-porphyrine or Me-phthalocyanine complex is bound to the spacer and, thus, to the substrate through a dative bond between the Me metal and the free end.

Immobilization may be performed by simple physical adsorption of the Me-porphyrine or Me-phthalocyanine complex on the solid organic (e.g.: PEG) or inorganic (e.g.: silica, kaolinite, montmorillonite) substrate according to liquid/ solid adsorption methods known in the art. Typically, the amount of catalyst immobilized on a substrate ranges from 1 to 40 micromoles of catalyst per g of substrate (including the possible spacer).

Preferably, the Me-porphyrine complexes have a chemical structure that prevents formation of complexes between the metal cation and a molecule of $O_2$, namely the irreversible formation of the so-called $\mu$-*oxo* complex, through the reaction with a second Me-porphyrine and/or Me-phthalocyanine complex, thus inhibiting the mobility of the electrophilic oxygen formed on the catalyst and responsible for the catalyzed oxidative reaction.

The irreversible formation of the $\mu$-*oxo* complexes may be prevented by properly functionalizing the pyrrolic rings on the Me-porphyrine structure, as it is known to the skilled person in the field, and as described in the publication by R.A. Sheldon, 1994, Metalloporphyrins in Catalytic Oxidation, Marcel Dekker, New York, pp. 1-27.

The Me-phthalocyanine compounds may be functionalized with sulfonic groups (e.g.: tetrasulphonatephthalocyanine), as described in Meunier e Sorokin, Acc. Chem. Res. 1997, 30, 470-476). The sulfonic groups also ensure the complete hydro-solubility of Me-phthalocyanine compounds.

The particularly preferred compounds to be used as catalysts in the present invention, due to their catalytic activity, are as follows:

meso-tetra-(2,6-dichloro-3-sulphonatephenyl)-porphyrinate of Fe(III) chloride,
meso-tetra-(2,6-dichloro-3-sulphonate-phenyl)-porphyrinate of Mn(II) chloride,
meso-tetra-N-methylpyridyl-porphyrinate of Mn(II) pentaacetate,
tetra-(2,6,9,12-tetra-sulphonate-phenyl)-phthalocyaninate of Mn(II) chloride.

Consistently with the present invention, the water soluble catalyst may be put in contact with the humus contained

in the soil whereby carbon sequestration is to be achieved through polymerization of humic molecules.

When used in a solid form, the catalyst is however soluble in water.

Preferably, when the hydro-soluble catalyst is used in solid-form, it is immobilized on a substrate, thus forming a supported catalyst. The supported catalyst is finely pulverized and uniformly spread on the soil with the aid of appropriate agriculture machinery (e.g.: seed, fertilizer, or pesticide spreaders).

In case the supported hydro-soluble catalyst is adsorbed on silicate, alumino-silicate or organic substrates, it is released through a kinetic equilibrium in the soil aqueous solution and comes in contact with the humic molecules dissolved therein. The polymerization reaction of humic molecules thus occurs in aqueous phase.

If the hydro-soluble catalyst is immobilized on the substrate via a spacer, having for instance a free end of the imidazole type, it is anyhow present at the aqueous interface, and can exert the catalytic activity towards the polymerization reaction of humic molecules in the aqueous phase.

In another form of preferred embodiment, the catalyst is distributed on soil in the form of an aqueous solution comprising the dissolved catalyst. Spreading on the soil may be performed by fertirrigation techniques commonly used in agriculture.

When spreading on soil as an aqueous solution, the amount of water in which it is diluted is chosen as a function of the clay content of the soil. The greater the amount of clay fraction in soil, the larger is the necessity to dilute the catalyst aqueous solution, for the same amount of catalyst. This is due to the fact that in order to reach a homogeneous distribution of the catalyst in contact with humus, in clay-soils a greater amount of water is needed to obtain an adequate degree of soil wettability.

The clay fraction of a soil is expressed in terms of weight percentage referred to weight of dry soil and it is measured by either the densitometric method or the pipette method, both well known to the skilled person in the field.

The most adequate concentration of the catalyst solution may be easily determined by the skilled person in the field as a function of the textural characteristics of the soil to be treated and by also taking into account that the organic carbon content in an agricultural soil is about 1-2 wt%.

When the catalyst is spread on soil in the form of an aqueous solution, the amount of catalyst spread on soil ranges preferably from 1.0 mol/ha to 10 mol/ha, more preferably from 3.0 mol/ha to 8.0 mol/ha of soil. It is preferable to use an aqueous solution having a catalyst concentration ranging from 0.001 mol/L to 0.1 mol/L, more preferably from 0.005 mol/L to 0.02 mol/L. The aqueous solution containing the catalyst is distributed on soil to be treated in amounts ranging from about 400 L/ha to about 600 L/ha. The distribution on the agricultural soil is conducted by fertirrigation.

When the catalyst is spread on soil in the solid form, namely as a supported catalyst, it is spread in such an amount so that the concentration in soil ranges preferably from 1 to 5 mol/ha, more preferably from 2 to 4 mol (catalyst) /ha. For example, an immobilized catalyst with 20 $\mu$mol of catalyst per g of substrate will be spread on soil to be treated in an amount ranging from 100 to 200 kg/ha.

The distribution of catalyst on soil to be treated brings the Me-porphyrine or Me-phthalocyanine complexes in contact with soil humus. At the end of the phase of spreading of the catalyst, the present invention provides for a phase of exposition of the catalyst-treated soil to electromagnetic radiations having wavelengths within the UV and/or visible spectral interval. The electromagnetic radiations provide the energy required to initiate the catalytic photo-oxidative polymerization reaction (photo-polymerization) of the compounds which form the humus.

Although it is not intended in this stage to refer to any particular theory, the applicant believes that a possible mechanism underlying the polymerization reaction of humic molecules is the following. It is known that Me-porphyrines and Me-phthalocyanines are capable of initiating production of singlet oxygen ($^1O_2$) from the oxygen dissolved in water (Guo-Yu Jiang et al., Physical Chemistry Chemical Physics, 2010, 12, 12229-12236). Singlet oxygen is an oxidizing specie with a brief average life (<0.04 ms), especially in water and, therefore, has a very limited diffusion through the aggregates of organic molecules that form the humus.

Singlet oxygen, activated by the hydro-soluble catalyst, enters in contact with the humic molecules dissolved in water only very briefly before undergoing quenching through collision with water molecules (Wahlen et al., Adv. Synth. Catal. 2004, 346, 152).

In the case of the present invention, thus, the activity of singlet oxygen towards humic molecules is exerted only by the capability of subtracting a proton and an electron to form free radicals, without extending the oxidation to the destruction of further covalent carbon-carbon bonds of the humic molecules. The free radicals formed on humic molecules may react with other near-by humic free radicals and give rise to multiple intermolecular oxidative couplings until no single electrons are left on humic molecules.

The photo-oxidative coupling mechanism of humic molecules is therefore activated in aqueous solution only very briefly, starting with the activation of singlet oxygen by the catalyst. This allows the polymerization of humic molecules instead of their complete oxidative destruction, that is instead observed in the case of hydrophobic catalyst. In such a case, in fact, the catalyst acts in a less hydrophilic medium producing singlet oxygen which, not being inactivated by water, continues its strongly oxidative action until destruction of the organic molecules.

Moreover, the heterogeneous humic molecules are aggregated in water in such a way that those molecules,

which are transformed in free radicals by the singlet oxygen photo-activated by the hydro-soluble catalyst, remain stable until they meet an analogous free radical with which they can rapidly form higher molecular weight oligomers.

The above described mechanism implies that the polymerization reaction among humic molecules is to take place in water, in order for the oxygen singlet to have time only to form the free radicals, which initiate the polymerization reaction. That explains the greater catalytic activity observed for more hydro-soluble catalysts (either in free or immobilized form). The greater hydro-solubility, in fact, ensures that the reaction among humic molecules occurs in the soil aqueous solution (where humic molecules are present in equilibrium with their forms adsorbed on soil particles) and proceeds by radical polymerization instead of destructive oxidation of molecular structure.

In a first embodiment of the invention, the catalyst-treated soil is left exposed to the sun, and the electromagnetic radiations are hence those produced by solar radiation.

A useful irradiation, however, may be also produced by adequate artificial sources (UV-Visible lamps). The use of artificial radiation sources may be contemplated, for instance, when the present invention is to be implemented on a soil that is not exposed to direct solar radiation, such as a soil in a greenhouse.

The minimum exposition time to reach significant results, both in terms of humus photo-polymerization and variation in soil aggregates distribution, is 24 h, preferably between 24 h and 120 h. This exposure time is referred to soil irradiation by natural solar light and also includes hours of dark.

When an artificial radiation source (UV-vis lamp) is employed, irradiation of the soil which is in contact with the catalyst may also be continuous, without dark intervals. In this case, it is possible to obtain the same results in terms of humus polymerization, in a shorter time than for the exposure to solar light irradiation. As the skilled person in the art would immediately know, the time necessary will depend on the intensity of the UV-vis radiations provided by the lamp.

The present invention, allows the catalyzed *in situ* photo-polymerization reaction, and, by this, the attainment of the sequestration of organic carbon in a humus-comprising soil.

Although it is not intended to refer here to any particular theory, it is believed that the humus photo-polymerization reaction is an oxidative polymerization that causes a radical coupling, namely the association of the humus phenolic molecules into larger-size polymeric molecules (up to pentameric molecules), whose structure is stabilized by formation of covalent bonds, for example C-C and C-O-C type of bonds, among the molecules of the starting compounds.

The occurred polymerization of humus through the present invention is confirmed by the different chemical behaviour of the treated soil as compared to that of the same untreated soil.

As it is well established in the literature of the discipline (e.g.: Piccolo .A., 2001, Soil Science, 166:810-833), the different molecules composing the humus of a soil, not yet treated according to the present invention, are found in nature in a self-associated form, stabilized by multiple weak bonds and form supra-molecular structures of an apparently large size.

Such structures have a low stability, because the association among the molecules composing humus is merely due to weak chemical bonds (van der Waals, hydrogen bonds, $\pi$-$\pi$ and CH-$\pi$ bonds) or to electrostatic interactions bridged by metals.

Consequently, the stability of such supra-molecular structures is relatively low. In fact, the addition of acetic acid (or other organic acids such as those exuded by plant roots) to solutions containing humic compounds, such to lower the pH of an aqueous solution from approx. 7.0 to approx. 3.5, is sufficient to alter the humic conformational stability. This behavior is generally considered as an evidence of the fact that the associated structures of the molecules composing humus are not held together by covalent bonds, namely such structures, despite the apparently analogous molecular weight, are not macromolecular polymers.

This weakly bound association of humic molecules offers the possibility that the phenolic free radicals induced by the hydro-soluble catalyst may easily diffuse to meet other free radicals with which they react through radical coupling.

The polymerized humus obtained by treating a soil with the method of the present invention, shows, on the contrary, a different behavior in respect to natural humus.

In particular, the molecular stability of humus after treatment according to the present invention appears significantly increased. The lack of conformational alteration when acetic acid (or other organic acids) is added to solutions of treated humus confirms the formation of a polymeric humus fraction.

Detailed information about analytical methods suitable to verify the aggregation state of humus (supra-molecular vs. polymeric structures) can be found in the scientific literature (e.g.: Piccolo A., 2002, Advances in Agronomy, 75: 57-134; Piccolo et al., 2002, Environmental Science and Technology, 36:76-84; Smejkalova, D. and Piccolo A., 2008, Environmental Science and Technology, 42, 699-706; Piccolo et al., 1999, European Journal of Soil Science, 50:1-8; Conte et al., 1999, Environmental Science and Technology, 33: 1682-1690; Piccolo et al., 2001, Soil Science 166: 174-185).

An increase of intermolecular covalent bonds is observed in humus polymerized according to the present invention. This indicates a greater stability of the supra-molecular structures, whose conformations are strengthened by covalent bonds, in addition to the plurality of weak bonds present before the polymerization.

A consequence of the greater conformational stability of a polymerized humus is the increased cementing effect

exerted on the soil inorganic substances, that provides aggregates of larger sizes than those originally found in the soil. The cementing effect is favoured by the reduced capability of the polymerized humus of being solvatated by water molecules and to enhanced adsorption capacity on the surface of the soil solid particles. In such aggregation process, the organic carbon present in soil is sequestered within the larger size-aggregates, thus being less exposed (physical protection) to the natural processes of mineralization (biological decay and degradation, microbial catabolism). Moreover, the increased chemical energy of the polymerized humus molecules due to the formation of covalent bonds, inhibits their degradation rate by soil microorganisms (chemical protection), resulting in lesser $CO_2$ respiration. Humus polymerization, therefore allows to increase the average residence time in soil for the sequestered organic carbon.

The reduction of organic carbon mineralization process, which follows the application of the present invention, allows to sequester carbon in soil and, consequently, decreases the amount of $CO_2$ gas that can be emitted in the atmosphere from a soil, by the microbial respiration process.

Besides the primary effect of carbon sequestration, the present invention also presents the unexpected advantage of increasing the structural stability of the treated soil and its intrinsic fertility.

In fact, humus aggregation also favours the deep soil permeability of rainfall water, with consequent reduction of fertile soil lost (generally estimated to be between 10 and 60 ton/ha, depending on soil slope) by surface erosion due to the rapid runoff of rainfall water that does not penetrate into soil.

In the case of agricultural soils, the treatment of a soil according to the present invention may be repeated on a cyclic basis, provided that the agricultural soil is plowed before each cycle, according to standard agronomic practices. Iteration of the operative phases according to claim 1, in alternation to soil plowing, permits to extend the benefits deriving from the polymerization of humus, namely carbon sequestration, the decrease of $CO_2$ emissions and the increase of physical stability and fertility of soil, also to subsurface soil layers, thereby also attaining a progressive yield increase of the crops possibly sowed on the treated soil.

The present invention represents an efficient and simple way to sequester carbon in soil and reduce the amount of a greenhouse gas ($CO_2$) released in atmosphere.

Moreover, considering the beneficial effects brought to a soil treated according to the present invention, this use may also be applied with the specific aim to increase soil structural stability, thus limiting the potential losses of fertile soils due to surface erosion.

The present invention is of simple implementation and requires the spreading of catalyst, either by itself or immobilized on an inert material, on the soil to be treated. The present invention does not require the use of other substances, such as, for example, oxidative compounds like $H_2O_2$ or $KHSO_5$, which are used in other catalyzed oxidative processes known in the state of art.

On the contrary, experiments on humus polymerization conducted in the presence of $H_2O_2$ but without electromagnetic radiation showed that the oxidative polymerization reaction is accompanied by a net disruption of the physical structure of treated soil.

The Me-porphyrine and Me-phthalocyanine complexes used as catalysts, especially when hydro-soluble, show several other application advantages with respect to other catalyst types, such as, for example, red-ox enzymatic catalysts (e.g.: peroxidase). The latter, in fact, if used in the present invention, would be easily denaturated in soil, thereby subsequently loosing their catalytic activity. The enzyme large molecular weight, combined to its capacity to offer sites for weak interactions, would determine the partial dispersion of humic molecules away from each other, thereby inhibiting the polymerization reaction. Moreover, the adsorption of the hydrophobic components of the enzyme on soil solid particles, inhibits its catalytic functions in water, where the humic molecules are present. Moreover, a direct application of red-ox enzymatic catalysts on soil would be much less convenient economically as compared to the use of the catalysts of the present invention due to either the high costs for enzyme production or the high degree of enzyme adsorption on soil solid particles. Moreover, this adsorption would alter the specific stereochemistry of red-ox enzymatic catalysts and result in the catalyst denaturation with consequent reduction in catalytic activity, particularly when the enzyme is applied in the solid state.

The Me-porphyrine and Me-phthalocyanine complexes applied as catalysts in the present invention, though commercially unavailable, are easily synthesized at reasonable costs.

The estimated amount of catalyst to be distributed on soil under treatment is in the same order of magnitude as that of main agrochemicals used in common agronomic practices (pesticides, biostimulants, plant hormones, etc.).

The present invention also positively influences the crop yields in agricultural productions, because Me-porphyrine and Me-phthalocyanine complexes have a stimulatory effect on the plant root systems, without exerting any toxic effect on roots.

The following examples of experimental implementation of the present invention are given in the mere illustration of the present invention and should not be taken as limitative of the scope of protection defined by the included claims.

EXAMPLE

Catalyst preparations

Two photo-polymerization catalysts were prepared: a Fe-porphyrine type, and a Mn-phthalocynanine type, both functionalized with benzenesulfonic or chlorobenzenesulfonic groups.

All employed reagents were of pure analytical grade by Sigma-Aldrich, Milano.

The synthesized catalysts were characterized by UV/Vis spectroscopy, after dissolution of the compounds in either methanol or water.

Preparation of catalyst FeTDCPP $(SO_3^-H^+)_4]Cl^-$ ([meso-tetra-(2,6-dichloro-3-sulphonatephenyl) porphyrinate of Iron (III) chloride]).

The said Me-porphyrine was synthesized starting from the porphyrine $H_2$TDCPP [meso-tetra-2,6-dichlorophenylporphyrine].

The meso-tetra-2,6-dichlorophenylporphyrine was synthesized according to the method reported in literature (Traylor P. S. et al., J. Chem. Soc. Chem. Commun., 1984, 279-280).

The meso-tetra-2,6-dichlorophenylporphyrine was converted in $H_2$TDCPP $(SO_3^-H^+)_4$ ([meso-tetra-(2,6-dichloro-sulphonatephenyl)-porphyrine]) as it follows.

In a single inlet 25 cc round bottom flask 200 mg of $H_2$TDCPP are dissolved in 8 ml of fuming $H_2SO_4$ and left stirring at 160°C for 12 hours under argon. The mixture is then poured carefully in a flask containing ice and $H_2O$, rinsing the flask with a minimum amount of $H_2O$. The solution, cooled with ice, is neutralized carefully, with saturated NaOH solution. The mixture is roto-evaporated at 60-70°C, at 20 mm Hg pressure. The residue is redissolved with $CH_3OH$ and salts left in the flask are filtered and washed with $CH_3OH$. The filtrate is rotoevaporated and redissolved with a minimum amount of $CH_3OH$ and left precipitating with ethyl ether. The mixture is filtrated and the residue redissolved with $CH_3OH$ and eluted through an strong cation-exchange resin, previously conditioned with HCl 10% solution, washed with $H_2O$ until pH is 6-7 and eluted with $H_2O$; the fraction with the compound is evaporated under vacuum and re-crystallized from $CH_3OH$/acetone.

The reaction yield was around 75%. The UV/Vis spectroscopic analysis of the compound dissolved in methanol provided the characteristic absorption bands (nm): 417, 522, 602, 659.

The $H_2TDCPP(SO_3^-H^+)_4$ compound was converted to $FeTDCPP(SO3^-H^+)_4]Cl^-$ ([meso-tetra-(2,6-dichloro-3-sulphonate-phenyl)porphyrinate of Iron (III) chloride]) as it follows.

In a two-inlets 100 cc round bottom flask, 200 mg of $H_2TDCPP(SO_3^-H^+)_4$ and 100 mg of $FeSO_4$ are dissolved in 100 ml of $H_2O$. The solution is then sparged for 10 minutes with argon and left boiling and refluxed under argon for 12 hours. The solvent is evaporated under vacuum and the residue is redissolved in water and eluted through a cation-exchange resin as by the same procedure described above for the preparation of the $H_2TDCPP(SO_3^-H^+)_4$ compound. The fraction containing the $FeTDCPP(SO_3^-H^+)_4]$ $Cl^-$ product is evaporated and the residue crystallized from $CH_3OH$/ acetone.

The reaction yield is 80%. The UV/Vis spectroscopic analysis of the compound dissolved in methanol provided the characteristic absorption bands: 422 nm, 521 nm.

Preparation of $MnTPHTA(SO_3^-H^+)_4]Cl^-$ ([tetra-(2,6,9,12-tetrasulphonatephenyl)phthalocyaninate of manganese(II) chloride]) catalyst

The compound $H_2TPHTA[(SO_3^-H^+)_4]$ ([tetra-(2,6,9,12-tetrasulphonatephenyl) phthalocyanine]) was prepared in the following way.

In a single-inlet 25 cc round bottom flask, 200 mg of phthalocyanine free base are dissolved in 8 ml of fuming $H_2SO_4$ and left stirring at 180°C for 12 hours under argon. The mixture is carefully poured in the end in a flask with $H_2O$ and ice, rinsing the round bottom flask with a minimum amount of water. The solution, cooled with ice, is carefully neutralized with a saturated NaOH solution.

The mixture is carefully rotoevaporated at 60-70°C, at 20 mmHg pressure. The residue is redissolved with $CH_3OH$ and the salt left in the round bottom flask is filtered and washed with $CH_3OH$. The solvent is then evaporated under vacuum and the residue redissolved with water. The solution is then eluted through a strong cation-exchange resin column, previously conditioned with a 10% HCl solution and then washed with $H_2O$ until pH is 6-7 and subsequently eluted with $H_2O$; the recovered fraction with the compound is evaporated under vacuum and re-crystallized from $CH_3OH$/acetone. The reaction yield is 80%. The UV/Vis spectroscopic analysis of the compound dissolved in methanol provided the characteristic absorption bands (nm): 345, 375, 570, 620, 690(sh).

The compound $MnTPHTA(SO_3^-H^+)_4]Cl^-$ ([tetra-(2,6,9,12-tetrasulphonatephenyl)phthalo-cyaninate of manganese(II) chloride]) was obtained as it follows.

In a two-inlets 100 cc round bottom flask, 200 mg of $H_2$TPHTA $(SO_3^-H^+)_4$ and 100 mg of $MnCl_2 \cdot 2H_2O$ are dissolved in 100 ml dimethylformamide (DMF). The solution is sparged for 10 minutes with argon and subsequently left boiling and refluxing under argon for 12 hours. The solvent is then evaporated under vacuum, redissolved in water, then eluted through strong cation-exchange resin as by the procedure described above for the preparation of $H_2$TPHTA $(SO_3^-H^+)_4$. The fraction containing the desired product, is evaporated and the residue crystallized from $CH_3OH$/acetone.

The reaction yield was 65%. The UV/Vis spectroscopic analysis of the compound dissolved in methanol provided the characteristic absorption bands (nm): 557, 590 and 650.

Preparation of the spacer as a binder between inorganic substrates and the hydro-soluble catalyst.

260 microlitres of (3-isocyanatepropyl) triethoxysilane and 140 microlitres of N-(3-aminopropyl) imidazole were combined to react in 2 ml dioxane, at room temperature, under nitrogen atmosphere, and under magnetic stirring. The mixture is allowed to react overnight to yield the compound 3-(1-imidazolyl) propylcarbamoyl-3'-aminopropyl triethoxysilane. Formation of this compound was confirmed by liquid 1H- and 13C-NMR spectroscopy.

Protonation of inorganic silicate or alumino-silicate substrates before reaction with a spacer

30 g of the clay mineral kaolinite were stirred for 48 hours, after suspension in 1 L of 2M HCl . The suspension was centrifuged and the separated solid residue was resuspended twice in 2M HCl for 48 hours. After protonation, the clay substrate residue was dialyzed in dialysis membranes with 3500 Da cut-off until solution reached the pH of distilled water. Finally, the clay mineral was freeze-dried and finely ground.

Preparation of the complex between the spacer and the inorganic silicate substrate

To the reaction mixture of the spacer, containing 3-(1-imidazolyl)propylcarbamoyl-3'-aminopropyl-triethoxysilane, it was added 1 g of clay mineral (kaolinite) protonated as described above. The formation of siloxane bonds between the ethoxysiloxane and the silanol groups of the silicate was carried out under nitrogen, refluxing the reaction mixture at 80°C overnight. The substrate-spacer complex was washed with dioxane and water and then freeze dried. The formation of the spacer-substrate complex was confirmed by solid-state NMR spectroscopy (CPMAS-NMR) for both 13C and 29Si nuclei and with ATR infrared spectroscopy.

Immobilization of Mn(TDCPPS)Cl on kaolinite functionalized with a spacer (spacer-substrate)

100 mg of kaolinite functionalized with a spacer (spacer-substrate), produced as described before, were made to react with different concentrations of an aqueous solution of Mn(TDCPPS)Cl, overnight, in darkness, and at 25°C under magnetic stirring. The Mn(TDCPPS)Cl not bound to the substrate was washed away with an aqueous NaCl 1M solution and then with water. The adducts are then freeze-dried and finely ground. Using an aqueous solution of Mn (TDCPPS)Cl with a concentration of around 0.16 $mg \cdot mL^{-1}$, it was prepared a supported catalyst with a concentration of 1.2 micromoles (catalyst)/g (substrate). Using an aqueous solution of Mn(TDCPPS)Cl with concentration of around 3.2 $mg \cdot mL^{-1}$, it was prepared a supported catalyst with a concentration of 24 micromoles (catalyst)/g (substrate).

Soil treatment.

The efficacy of the present invention was evaluated in the laboratory on three calcareous soils typical of the Mediterranean area, and named Porrara soil, Colombaia soil and Itri soil.

The three soils have different texture (clay, silt and sand) and different organic matter content.

The main properties of these soils are reported in Table 1.

Table 1. Properties of analyzed soils

| Property | Porrara | Colombaia | Itri |
|---|---|---|---|
| Coarse sand ($g \cdot kg^{-1}$) | 119±6 | 180±7 | 80±3 |
| Fine sand ($g \cdot kg^{-1}$) | 237±10 | 230±9 | 440±11 |
| Silt ($g \cdot kg^{-1}$) | 227±8 | 350±7 | 380±10 |
| Clay ($g \cdot kg^{-1}$) | 417±12 | 240±5 | 100±4 |

(continued)

| Property | Porrara | Colombaia | Itri |
|---|---|---|---|
| Organic carbon ($g(C)\cdot kg^{-1}$) | 9.1±0.4 | 13.1±0.9 | 4.0±0.2 |
| pH[1] | 8.3±0.1 | 8.2±0.1 | 8.4±0.1 |
| Minerals[a] | C+++, F++, I++, K++, M++, Q +++, S+++ | C+++, F+++, I++, K++, M++ | D+++, F+, LCK+ |
| [a] C = calcite, D = dolomite, F = feldspate, I = illite, K = Kaolinite, LCK = low crystallinity kaolinite, M = mica, Q = quartzite, S = smectite, +++ = predominant, ++ = present, + = traces. [1] pH value is referred to an aqueous solution obtained dispersing 10 g of the soil in 25 ml of water. | | | |

The soil under examination were sieved through a 4.75 mm diameter cut-off sieve.

Each sieved soil sample was placed on a Petri dish.

For each type of soil, a reference sample was prepared (control soil) by adding 60 g of the sieved soil with an amount of water corresponding to specific field capacity of the soil: to the soils of Porrara, Colombaia and Itri soils, 34 ml, 28 ml, and 20 ml of water were added, respectively. The field capacity is intended as the amount of water the soil requires to be completely wetted, without being submerged.

The soil samples to be subjected to humus polymerization, as by the present invention, were obtained by adding, to 60 g of the sieved soil, 3 mg of the $FeTDCPP(SO_3^-H^+)_4]Cl^-$ catalyst dissolved in the same amount of water as that added to the control soil to reach field capacity (on different soils, the same amount of catalyst is dissolved in variable amounts of water, to take into account the different clay content fraction of the soil and ensure an adequate soil wettability).

Two more sets of comparative samples were prepared:. the first set was prepared by adding 3 ml of a 8.6 M $H_2O_2$ solution to control soils. The second set was prepared by adding to control soils both 3 mg $FeTDCPP(SO_3^-H^+)_4]Cl^-$, dissolved in the same amount of water as that added to control soil to reach field capacity, and 3 ml of a 8.6 M $H_2O_2$ solution.

Soil samples characteristics were assessed by measuring the following parameters.

<u>Stability of soil aggregates in water.</u>

In order to evaluate the stability in water of soil samples, the mean weight diameter in water (MWDw) of soil aggregates was calculated. To this purpose, the soil samples were prepared by water sieving in adapting the Kemper and Rosenau (1986) method, as described hereafter.

A 30 g dry soil sample is placed on the uppermost sieve of a set of three stacked sieves (cutoff 1.0 mm, 0.50 mm and 0.25 mm, in the order). The samples are slowly wetted by immersing the sieves in water until they are covered with 2 cm of water for 30 minutes. After this, the sieves underwent manual vertical oscillation (4 cm extension of vertical oscillation) for 30 times in 1 minute. The soil aggregates distributed by this procedure on each stacked sieve were dried in the oven at 60°C, weighed and stored at room temperature.

MWDw index was calculated by the following equation:

$$\mathrm{MWDw} = \sum_{i=1}^{n} X_i W_i$$

where $X_i$ is the mean diameter of each aggregate fraction and $W_i$ is the total weight of soil in the $i^{th}$ fraction.

A greater MWDw value indicates a soil constituted in average by greater aggregate-sizes.

A large MWDw also implies a greater resistance to soil erosion and better physical soil fertility (due to increased gaseous and aqueous exchange of plant roots).

<u>Soil respiration.</u>

$CO_2$ emission by each soil (soil respiration) was assessed by a dynamic absorption method. The $CO_2$ emitted by 9 g of soil sample, within a 27 days period, was absorbed by 20 ml of 0.01 M NaOH solution (absorbing solution). The $CO_2$ absorbed by such solution was measured by back-titration with a 0,01 M HCl solution, after having added 7 ml of 0,5 M $BaCl_2$ to the absorbing solution. The values of $CO_2$ emitted by soil, hereafter reported, were subtracted from the contribution derived from airborne $CO_2$.

Soil total organic Carbon.

The amount of organic carbon present in a soil was measured by subtracting the total inorganic carbon content.

The amount of total inorganic carbon present in a soil sample was calculated by difference between total carbon content (organic and inorganic carbon) and total organic carbon contained in soil.

Total carbon was measured by dry combustion (elemental analyzer Fisons EA 1108) on soil samples dried on open air.

The amount of organic carbon was measured with the standard Walkley-Black method (*Soil Survey Standard Test Method, series C6A/2, NSW Department of Natural Resources*).

Results

The values for the MWDw index for different samples are reported in Figure 1. In Figure 1, the experimental samples were labeled with the following codes:

A (5 d) = control soil covered with Petri dish and left exposed to solar light for 5 days (reference sample);
AP (5 d) = sieved soil treated with the Fe-porphyrine catalyst, covered with Petri dish and left exposed to solar light for 5 days (sample treated according to this invention);
B (5 d) = control soil treated with 3 ml of 8.6 M $H_2O_2$, covered with Petri dish and left exposed to solar light for 5 days (comparative sample);
BP (5 d) = sieved soil treated with Fe-porphyrine catalyst and 3 ml of 8.6 M $H_2O_2$ solution, covered with Petri dish and left exposed to solar light for 5 days (comparative sample).

Exposure time, as expressed above in days, is meant to also include dark hours. One day of exposure means an average of 12 hours of effective solar light exposure.

The aforementioned samples were subsequently subjected to 15 cycles of wetting and drying (w/d cycles). Each w/d cycle consists in adding the sample with an amount of distilled water to periodically restore the specific soil field capacity and subsequently allowing complete desiccation by evaporation. The degree of desiccation can be assessed by weighing the soil sample before and after water addition: the sample is completely dried when its weight reaches again the value prior to water addition. In average, complete desiccation is reached after one weak from water addition. The samples treated with w/d cycles are labeled in Figure 1 with the denomination "(15 w/d)".

Histograms in Figure 1 show a MWDw index of 1.15 mm for Porrara control soil, 0.74 mm for Colombaia control soil, and 0.32 mm for Itri control soil.

In the three soils, aggregate stability increased with the progressive increase of clay content and/or decrease of sand content in soils.

The larger MWDw indexes for control soils corresponded to greater amount of clay (42% (Porrara), 24% (Colombaia) 10% (Itri)), or lower amount of sand (36% (Porrara), 41% (Colombaia), 52% (Itri)).

Soil samples treated according to the present invention, after 5 days of solar light exposure, are characterized by a greater MWDw index as compared to the correspondent control soil, thus showing an increased structural stability (MWDw). The increase in stability is maintained also after 15 w/d cycles, while no significant difference in stability, between the samples treated according to the present invention and their respective control soils, was any longer observed after w/d 30 cycles (results not shown).

Therefore, the increase of water stability for the aggregates obtained by treating the soils according to the present invention leads to an increase of soil aggregation. This strengthening of the soil aggregation state may be attributed to the increase in number of the intermolecular covalent bonds formed by the polymerization reaction among the molecules of the humic compounds of the soil.

From Figure 1, it is observed that the present invention improved structural stability (MWDw) of the three soils (both after 5 days of solar light exposure and after the following 15 w/d cycles) by a greater extent than when the present invention was applied in presence of an oxidizing agent ($H_2O_2$).

Figures 2 and 3 show the percentage distribution of organic carbon (referred to 1 kg of soil) of different fractions of water-stable aggregates of samples exposed to solar light for 5 days (Figure 2) and after 15 more w/d cycles (Figure 3). In Figure 2 and 3, the different fractions of aggregates are labeled as it follows:

I = 4.75 mm to 1.0 mm,
II = 1.0 mm to 0.5 mm,
III = 0.5 mm to 0.25 mm,
IV = less than 0.25 mm.

Figure 2 shows that polymerization of humus by the present invention provides a different percentage distribution of organic carbon within different aggregate-size fractions. In particular, it can be noted that a greater structural stability (an increased percentage of larger aggregate-sizes) also corresponds to an enhanced organic carbon content in these fractions, as compared to control soils.

In Figure 2, after only 5 days of exposure to solar light, the AP sample (5 d) produces a significant reduction in organic carbon content in the aggregate-size fraction smaller than 0.25 mm for all three soils, while the organic carbon content was significantly larger in the 4.75-1.0 mm aggregate-size only for the clay-rich Porrara soil.

Accumulation of organic carbon in larger aggregate-sizes increases with w/d cycles, becoming significant after only 15 w/d cycles for the silty Colombaia soil, and even after 30 w/d cycles for the less stable sandy Itri soil. These results suggest that the catalytic polymerization of humus continues to be effective also during w/d cycling.

Moreover, Figure 2 shows that addition of $H_2O_2$ (sample B (5 d)) favours the mineralization of organic matter in soil, thereby resulting in the disaggregation of larger aggregates-sizes and in the formation of smaller aggregates-sizes. The presence of $H_2O_2$ alone, therefore, causes a reduction in soil stability. The polymerization reaction in the presence of $H_2O_2$ (sample BP (5 d)) limits the negative effect of $H_2O_2$. However, the organic carbon distribution within the large aggregates-sizes does not reach the greater values found when the present invention was applied. The same behavior was shown by soils after 15 wetting and drying cycles (figure 3).

Figure 4 shows the results of soil respiration (as $CO_2$ emission) after exposure to solar light for 5 days. These results confirm the efficacy of the present invention in sequestering organic carbon in soil and its advantages from an environmental standpoint.

In particular, Figure 4 indicates that the present invention is more efficient when applied in the absence of $H_2O_2$, thus resulting in $CO_2$ emissions significantly lower than those measured in the presence of $H_2O_2$, whereby instead it is noted the partial destruction of soil organic compounds produced by this oxidizing agent. This partial destruction of organic matter by the oxidizing reagent is clearly evident in the control soil treated with $H_2O_2$.

The photo-polymerization reaction conducted in the presence of both $H_2O_2$ and Fe-porphyrine catalyst partially moderates the mineralization of organic matter, while allowing the polymerization of humus. However, this treatment is not able to reach the same efficiency in mitigating $CO_2$ emission from soil as that obtained with the present the invention.

Very comparable results were observed by using, in same conditions, the $MnTPHTA(SO_3^-H^+)_4]Cl^-$ catalyst.

<u>POLYMERIZATION OF CATECHOL AND HUMIC SUBSTANCES IN WATER</u>

<u>Oxidative Polymerization of a model humic substance (catechol) catalyzed by</u> Mn(TDCPPS)Cl <u>immobilized on a clay substrate.</u>

An aqueous solution (3 mL) of 0.25 M potassium phosphate buffer at pH 6, containing catechol (50 ppm), is put into contact with two different supported catalysts, each composed by 10 mg kaolinite, on which it was immobilized: i) 1.2 micromoles Mn(TDCPPS)Cl (first catalyst); ii) 24 micromoles Mn(TDCPPS)Cl (second catalyst). The reaction was carried out under exposure to solar light, at room temperature, in aerobic conditions, and under magnetic agitation. The half-life of catechol concentration was monitored via HPLC. After the first reaction cycle, the immobilized catalyst was separated from the supernatant by centrifugation, washed three times with water, and freeze dried before recycling it in a second polymerization reaction. An aqueous solution of catechol containing 1.2 $\mu$moles of hydro-soluble Mn(TDCPPS)Cl (unsupported) was exposed to solar light under the same conditions as described above for the immobilized catalyst, in order to obtain a control reaction conducted with the non immobilized catalyst.

<u>Photo-oxidative polymerization of a humic acid (HA) from lignite catalyzed by Mn(TDCPPS)Cl immobilized on a clay substrate.</u>

The polymerization of a lignite HA was performed in 2 ml of a 0.25 M potassium phosphate aqueous buffer solution at pH 6 containing 0.5 $mg \cdot mL^{-1}$ of HA, and in the presence of 10 mg of kaolinite on which 1.2 micromoles of Mn(TDCPPS)Cl had been immobilized, as previously described. The reaction was carried out under UV radiation at 254 nm, room temperature, in aerobic conditions, and under magnetic stirring. After two hours, the supernatant containing the dissolved humic acid was separated from the catalyst and its molecular-size distribution monitored by HPSEC (High Performance Size Exclusion Chromatography), both before and after addition of glacial acetic acid at pH= 3.5.

<u>Results</u>

The photo-polymerization reaction of catechol in the presence of Mn(TDCPPS)Cl immobilized, through a spacer, on kaolinite, allowed an evaluation of the catalyst efficiency at the immobilization rate of 1.2 and 24 micromoles. Figure 5 shows that for 1.2 micromoles of non immobilized soluble catalyst (histogram A), the half-life of catechol is 23 h, while

in the presence of the same catalyst immobilized on kaolinite (histogram B) the half-life is reduced to 5 h. The catechol half-life remains around 11 h even during a second reaction cycle that employed the same catalyst/kaolinite residue used in the first reaction cycle (histogram C). When 24 micromoles of catalyst immobilized on kaolinite are used in the reaction, the half-life of catechol is reduced to less than 1 h for the first cycle (histogram D), and remains less than 5 h for the second cycle (histogram E). These results show that the activity of 1.2 and 24 micromoles of the hydro-soluble catalyst when immobilized on kaolinite is 5 and 25 times larger than for the free catalyst, respectively.

Figure 6 shows the activity of the immobilized catalyst towards the photo-polymerization of an aqueous solution of a humic acid (HA) derived from lignite. While HA, in a solution without catalyst (control solution), revealed, as by HPSEC analysis, a mean weight-averaged molecular weight (MWw) of 3900 Da (histogram A), the activity of the immobilized catalyst increased MWw to over 11000 Da (histogram C). Moreover, when glacial acetic acid (AcOH) was added to lower pH of humic solutions from pH 6 to pH 3.5, and disrupt the loose conformations of humic molecular associations, MWw values were reduced to 920 (histogram B) and 4900 Da (histogram D) for the HA without and with the immobilized catalyst, respectively.

These results indicate that the catalytic activity of the immobilized catalyst is highly efficient in the photo-polymerization of HA, and, therefore, enables the formation of new covalent C-C and/or C-O-C intermolecular bonds, that are not destabilized by the action of acetic acid.

Very similar results were observed by using, in the same conditions, the $MnTPHTA(SO_3^-H^+)_4]Cl^-$ catalyst immobilized on both kaolinite and montmorillonite.

## Claims

1. Use of a catalyst comprising a hydrosoluble complex of the metal-porphyrine and/or the metal-phthalocyanine type for sequestering organic carbon in soil naturally containing humus by putting in contact said soil with said catalyst and exposing them to electromagnetic radiations with wavelengths in the UV and/or visible interval.

2. Use according to claim 1, **characterized in that** the metal of said complex of the metal-porphyrine and/or metal-phthalocyanine type, is a metallic ion selected from those of metals belonging to the following groups and series of the periodic table of elements: group IIa, group IIIa, group IVa, group Va, group VIa, group VIIa, group VIII, group Ib, group IIb, group IIIb, series of lanthanides and series of actinides.

3. Use according to claim 2, **characterized in that** said metallic ion is selected from the group consisting of $Co^{2+}$, $Fe^{3+}$, $Fe^{2+}$, $Ni^{2+}$, $Cu^{2+}$, $Mo^{3+}$, $V^{5+}$, $Ca^{2+}$, $Ba^{2+}$, $Sr^{2+}$, $Cr^{3+}$, $Cr^{5+}$, $Mn^{2+}$ and $Zn^{2+}$, preferably selected from $Co^{2+}$, $Fe^{3+}$, $Fe^{2+}$, $Mn^{2+}$, $Cu^{2+}$ and $Ni^{2+}$.

4. Use according to one or more of previous claims, **characterized in that** said compounds of the metal-porphyrine and metal-phthalocyanine type comprise, in the peripheral substitution positions of the porphyrine or phthalocyanine ring, hydrophilic groups selected from: carboxylic, benzenesulfonic, chlorobenzenesulfonic, ammonium methylbenzene, peptide and carbohydrate groups.

5. Use according one or more of previous claims, **characterized in that** said compounds of the metal-porphyrine and metal-phthalocyanine type, are selected from the group consisting of:

   meso-tetra-(2,6-dichloro-3-sulphonatephenyl)-porphyrinate of Fe(III) chloride,
   meso-tetra-(2,6-dichloro-3-sulphonate-phenyl)-porphyrinate of manganese(II) chloride,
   meso-tetra-N-methylpyridyl-porphyrinate of manganese(II) pentaacetate,
   tetra-(2,6,9,12-tetrasulphonatephenyl)-phthalocyaninate of manganese(II) chloride.

6. Use according to one or more of the previous claims, **characterized in that** said catalyst is hydro-soluble and is put in contact, in the solid-state or in the form of an aqueous solution, with said soil naturally comprising humus.

7. Use according to the previous claim, **characterized in that** said aqueous solution comprises said catalyst in a concentration ranging between 0.001 mol/L and 0.1 mol/L, preferably between 0,005 mol/L and 0,02 mol/L.

8. Use according to one or more of the previous claims, **characterized in that** said compound of the metal-porphyrine and metal-phthalocyanine type is distributed on the soil in a quantity varying from 1.0 mol/ha and 10 mol/ha, preferably from 3.0 mol/ha and 8.0 mol/Ha of soil.

9. Use according to one or more of the previous claims, **characterized in that** the UV and visible electromagnetic radiations are produced by solar radiation.

10. Use according to one or more of previous claims, **characterized in that** said operative phases a) and b) are repeated over time, after plowing the soil.

11. Use according to one or more of the previous claims 1-5, **characterized in that** the catalyst is supported on a substrate selected from the group consisting of silicate or alumino-silicate substrates, and organic substrates, for use in the method according to claim 1.

12. Use according to the previous claim, **characterized in that** said metal-porphyrine and/or metal-phthalocyanine catalyst is supported on said silicate or alumino-silicate substrate through interposition of a molecule (spacer) having a first end consisting of a Lewis base (free end), preferably an imidazole group, and a second end (fixed end) consisting of a group capable of binding through covalent bonds to surface silanols (-SiOH) (siloxane bonds) or to surface Al hydroxide (-AlOH) of the silicate or alumino-silicate substrate.

13. Use according to claim 11, **characterized in that** said metal-porphyrine and/or metal-phthalocyanine catalyst is supported on said organic substrate through interposition of a molecule (spacer) having a first end consisting of a Lewis base (free end), preferably an imidazole group, and a second end (fixed end) consisting of an amino group capable of binding through amide bonds to carboxylic groups of said organic substrate.

**Patentansprüche**

1. Verwendung eines Katalysators umfassend einen wasserlösbaren Komplex der Art von Metall-Porphyrin und/oder Metall-Phthalocyanin zur Sequestrierung von organischem Kohlenstoff im natürlich Humus enthaltenden Erdboden, durch das Inkontaktbringen vom Erdboden mit dem Katalysator und ihre Exposition an elektromagnetischen Strahlungen mit Wellenlängen im UV- und/oder sichtbaren Bereich.

2. Verwendung nach Anspruch 1, **dadurch gekennzeichnet, dass** das Metall des Komplexes der Art von Metall-Porphyrin und/oder Metall-Phthalocyanin ein Metallion ist, wobei das Metall aus den folgenden Gruppen und Reihen vom Periodensystem der Elemente ausgewählt ist, d.h., Gruppe IIa, Gruppe IIIa, Gruppe IVa, Gruppe Va, Gruppe VIa, Gruppe VIIa, Gruppe VIII, Gruppe Ib, Gruppe IIb, Gruppe IIIb, Reihe von Lanthaniden und Reihe von Actiniden.

3. Verwendung nach Anspruch 2, **dadurch gekennzeichnet, dass** das Metallion aus der Gruppe bestehend aus $Co^{2+}$, $Fe^{3+}$ $Fe^{2+}$, $Ni^{2+}$, $Cu^{2+}$, $Mo^{3+}$, $V^{5+}$, $Ca^{2+}$, $Ba^{2+}$, $Sr^{2+}$, $Cr^{3+}$ $Cr^{5+}$, $Mn^{2+}$ und $Zn^{2+}$, vorzugsweise aus der Gruppe bestehend aus $Co^{2+}$, $Fe^{3+}$, $Fe^{2+}$, $Mn^{2+}$, $Cu^{2+}$, und $Ni^{2+}$ ausgewählt ist.

4. Verwendung nach einem oder mehreren der vorhergehenden Ansprüche, **dadurch gekennzeichnet, dass** die Verbindungen der Art von Metall-Porphyrin und Metall-Phthalocyanin in der peripheren Substitutionspositionen des Porphyrin- oder Phthalocyaninringes, hydrophilen Gruppe umfassen, die daraus ausgewählt sind: Carboxyl-, Benzolsulfon-, Chlorbenzolsulfon-, Ammonium Methylbenzol-, Peptid und Kohlenhydratgruppen.

5. Verwendung nach einem oder mehreren der vorhergehenden Ansprüche, **dadurch gekennzeichnet, dass** die Verbindungen der Art von Metall-Porphyrin und Metall-Phthalocyanin aus der Gruppe ausgewählt sind, die aus
Eisen(III) Chlorid meso-tetra-(2,6-Dichloro-3-sulphonatphenyl)- porphyrinat,
Mangan(II) Chlorid meso-tetra-(2,6-Dichloro-3-sulphonatphenyl)- porphyrinat,
Mangan(II) Pentaazetat meso-tetra-N-methylphyridyl-porphyrinat,
Mangan(II) Chlorid tetra-(2,6,9,12-Tetrasulphonatphenyl)-phthalocyaninat
besteht.

6. Verwendung nach einem oder mehreren der vorhergehenden Ansprüche, **dadurch gekennzeichnet, dass** der Katalysator wasserlösbar ist und als Festkörper oder als wässrige Lösung mit dem Erdboden, der natürlich Humus umfasst, in Kontakt gebracht wird.

7. Verwendung nach dem vorhergehenden Anspruch, **dadurch gekennzeichnet, dass** die wässrige Lösung den Katalysator in einem von 0,001 mol/L bis 0,1 mol/L, vorzugsweise von 0,005 mol/L bis 0,02 mol/L liegenden Konzentrationsbereich umfasst.

8. Verwendung nach einem oder mehreren der vorhergehenden Ansprüche, **dadurch gekennzeichnet, dass** die Verbindung der Art von Metall-Porphyrin und Metall-Phthalocyanin auf dem Boden in einer Menge ausgesteuert ist, die von 1,0 mol/ha und 10 mol/ha, vorzugsweise von 3,0 mol/ha und 8,0 mol/ha vom Erdboden variiert.

9. Verwendung nach einem oder mehreren der vorhergehenden Ansprüche, **dadurch gekennzeichnet, dass** die UV und die sichtbaren elektromagnetischen Strahlungen der Sonnenstrahlung entsprechen.

10. Verwendung nach einem oder mehreren der vorhergehenden Ansprüche, **dadurch gekennzeichnet, dass** die Arbeitsstufen a) und b) nach dem Pflügen des Bodens über die Zeit wiederholt werden.

11. Verwendung nach einem oder mehreren der vorhergehenden Ansprüche 1 bis 5, **dadurch gekennzeichnet, dass** zur Verwendung im Verfahren nach Anspruch 1 der Katalysator auf einem Substrat gestützt ist, das aus der aus Silikat- oder Aluminosilikatsubstraten und organischen Substraten bestehtehenden Gruppe ausgewählt ist.

12. Verwendung nach dem vorhergehenden Anspruch, **dadurch gekennzeichnet, dass** der Metall-Porphyrin und/oder Metall-Phthalocyanin Katalysator auf dem Silikat- oder Aluminosilikatsubstrat durch Interposition eines Moleküls (Abstandhalter) gestützt ist, wobei das Molekül ein aus einer Lewis Basis bestehende erstes Ende (freies Ende), vorzugsweise eine Imidazolgruppe, und ein zweites Ende (gebundenes Ende) aufweist, wobei dieses Ende aus einer Gruppe besteht, die zum kovalenten Binden an oberflächliche Silanole (-SiOH) (Siloxan-Bindungen) oder an oberflächliche Aluminiumhydroxid (-AlOH) des Silikat oder Aluminosilikatsubstrats fähig ist.

13. Verwendung nach Anspruch 11, **dadurch gekennzeichnet, dass** der Metall-Porphyrin und/oder Metall-Phthalocyanin Katalysator auf dem organischen Substrat durch Interposition eines Moleküls (Abstandhalter) gestützt ist, wobei das Molekül ein aus einer Lewis Basis bestehende erstes Ende (freies Ende), vorzugsweise eine Imidazolgruppe, und ein zweites Ende (gebundenes Ende) aufweist, wobei dieses Ende aus einer Aminogruppe besteht, die zum Binden durch Amidbindungen an Carboxylgruppen des organischen Substrats fähig ist.

## Revendications

1. Utilisation d'un catalyseur comprenant un complexe hydrosoluble du type porphyrine métallique et/ou phtalocyanine métallique pour séquestrer du carbone organique dans un sol contenant naturellement de l'humus en mettant en contact ledit sol avec ledit catalyseur et en les exposant à des rayonnements électromagnétiques avec des longueurs d'ondes dans l'intervalle des UV et/ou visible.

2. Utilisation selon la revendication 1, **caractérisée en ce que** le métal dudit complexe du type porphyrine métallique et/ou phtalocyanine métallique est un ion métallique sélectionné parmi ceux des métaux appartenant aux groupes et séries suivants de la table périodique des éléments : groupe IIa, groupe IIIa, groupe IVa, groupe Va, groupe VIa, groupe VIIa, groupe VIII, groupe Ib, groupe IIb, groupe IIIb, série de lanthanides et série d'actinides.

3. Utilisation selon la revendication 2, **caractérisée en ce que** ledit ion métallique est sélectionné à partir du groupe comprenant $Co^{2+}$, $Fe^{3+}$, $Fe^{2+}$, $Ni^{2+}$, $Cu^{2+}$, $Mo^{3+}$, $V^{5+}$, $Ca^{2+}$ $Ba^{2+}$ $Sr^{2+}$ $Cr^{3+}$, $Cr^{5+}$, $Mn^{2+}$ et $Zn^{2+}$, de préférence sélectionné parmi $Co^{2+}$, $Fe^{3+}$, $Fe^{2+}$, $Mn^{2+}$, $Cu^{2+}$ et $Ni^{2+}$.

4. Utilisation selon une ou plusieurs revendications précédentes, **caractérisée en ce que** lesdits composés du type porphyrine métallique et phtalocyanine métallique comprennent, dans les positions de substitution périphériques du noyau de porphyrine ou de phtalocyanine, des groupes hydrophiles sélectionnés parmi : groupes carboxylique, benzènesulfonique, chlorobenzènesulfonique, méthylbenzène d'ammonium, peptide et hydrate de carbone.

5. Utilisation selon une ou plusieurs revendications précédentes, **caractérisée en ce que** lesdits composés du type porphyrine métallique et phtalocyanine métallique sont sélectionnés à partir du groupe comprenant :

   méso-tétra-(2,6-dichloro-3-sulfonatephényle)-porphyrinate de chlorure de Fe(III),
   méso-tétra-(2,6-dichloro-3-sulfonatephényle)-porphyrinate de chlorure de manganèse(II),
   méso-tétra-N-méthylpyridyl-porphyrinate de penta-acétate de manganèse(II),
   tétra-(2,6,9,12-tétrasulfonatephényle)- phtalocyaninate de chlorure de manganèse(II).

6. Utilisation selon une ou plusieurs revendications précédentes, **caractérisée en ce que** ledit catalyseur est hydro-

soluble et est mis en contact, à l'état solide ou sous la forme d'une solution aqueuse, avec ledit sol contenant naturellement de l'humus.

7. Utilisation selon la revendication précédente, **caractérisée en ce que** ladite solution aqueuse comprend ledit catalyseur dans une concentration dans la plage entre 0,001 mol/L et 0,1 mol/L, de préférence entre 0,005 mol/L et 0,02 mol/L.

8. Utilisation selon une ou plusieurs revendications précédentes, **caractérisée en ce que** ledit composé du type porphyrine métallique et phtalocyanine métallique est distribué dans le sol dans une quantité variant de 1,0 mol/ha et 10 mol/ha, de préférence de 3,0 mol/ha et 8,0 mol/ha de sol.

9. Utilisation selon une ou plusieurs revendications précédentes, **caractérisée en ce que** les rayonnements électromagnétiques UV et visibles sont produits par rayonnement solaire.

10. Utilisation selon une ou plusieurs revendications précédentes, **caractérisée en ce que** lesdites phases opératoires a) et b) sont répétées dans le temps, après labourage du sol.

11. Utilisation selon une ou plusieurs revendications précédentes 1 à 5, **caractérisée en ce que** le catalyseur est supporté sur un substrat sélectionné à partir du groupe comprenant des substrats de silicate ou d'aluminosilicate et des substrats organiques, pour l'utilisation dans le procédé selon la revendication 1.

12. Utilisation selon la revendication précédente, **caractérisée en ce que** ledit catalyseur de porphyrine métallique et/ou phtalocyanine métallique est supporté sur ledit substrat de silicate ou d'aluminosilicate par le biais de l'interposition d'une molécule (élément d'espacement) ayant une première extrémité consistant en une base de Lewis (extrémité libre), de préférence un groupe imidazole, et une deuxième extrémité (extrémité fixe) consistant en un groupe capable de se lier à travers des liaisons covalentes à des silanols de surface (-SiOH) (liaisons siloxanes) ou à des hydroxyde d'aluminium de surface (-AlOH) du substrat de silicate ou d'aluminosilicate.

13. Utilisation selon la revendication 11, **caractérisée en ce que** ledit catalyseur de porphyrine métallique et/ou phtalocyanine métallique est supporté sur ledit substrat organique par le biais de l'interposition d'une molécule (élément d'espacement) ayant une première extrémité consistant en une base de Lewis (extrémité libre), de préférence un groupe imidazole, et une deuxième extrémité (extrémité fixe) consistant en un groupe amino capable de se lier à travers des liaisons amides à des groupes carboxyliques dudit substrat organique.

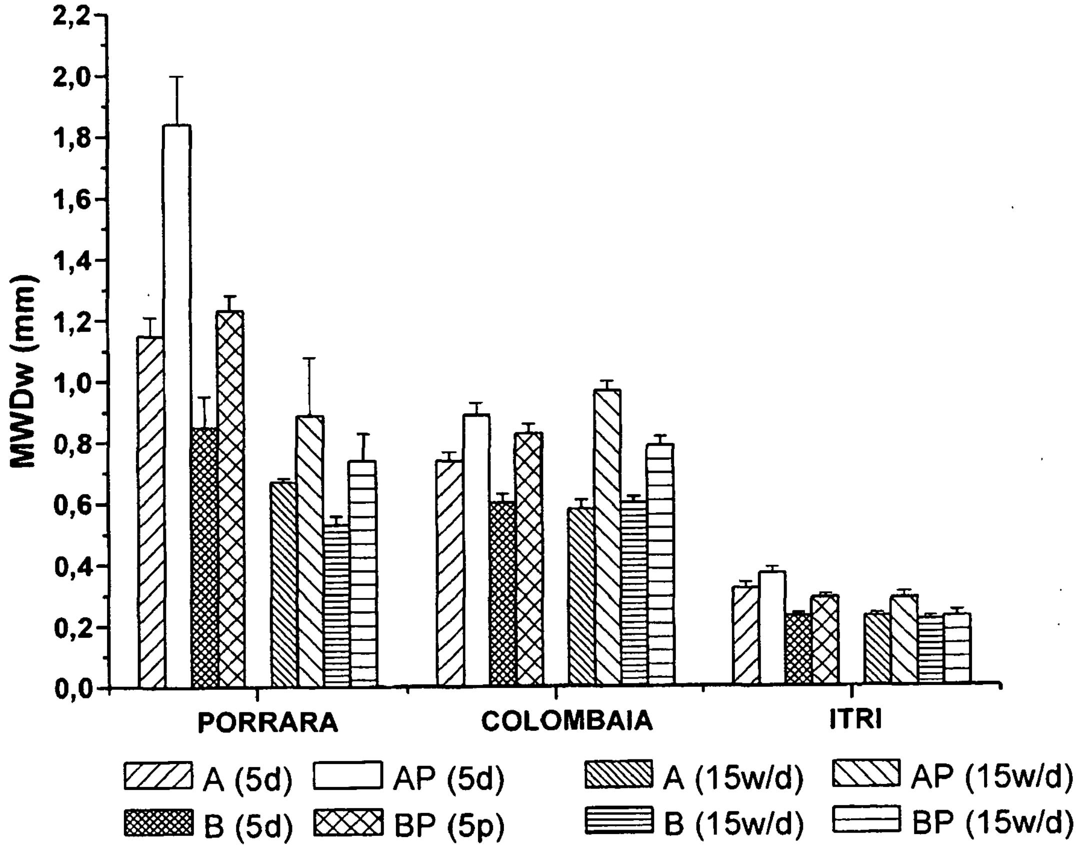
2,2
2,0
1,8
1,6
1,4
1,2
1,0
0,8
0,6
0,4
0,2
0,0
MWDw (mm)
PORRARA
COLOMBAIA
ITRI
A (5d)
AP (5d)
A (15w/d)
AP (15w/d)
B (5d)
BP (5p)
B (15w/d)
BP (15w/d)

Fig. 1

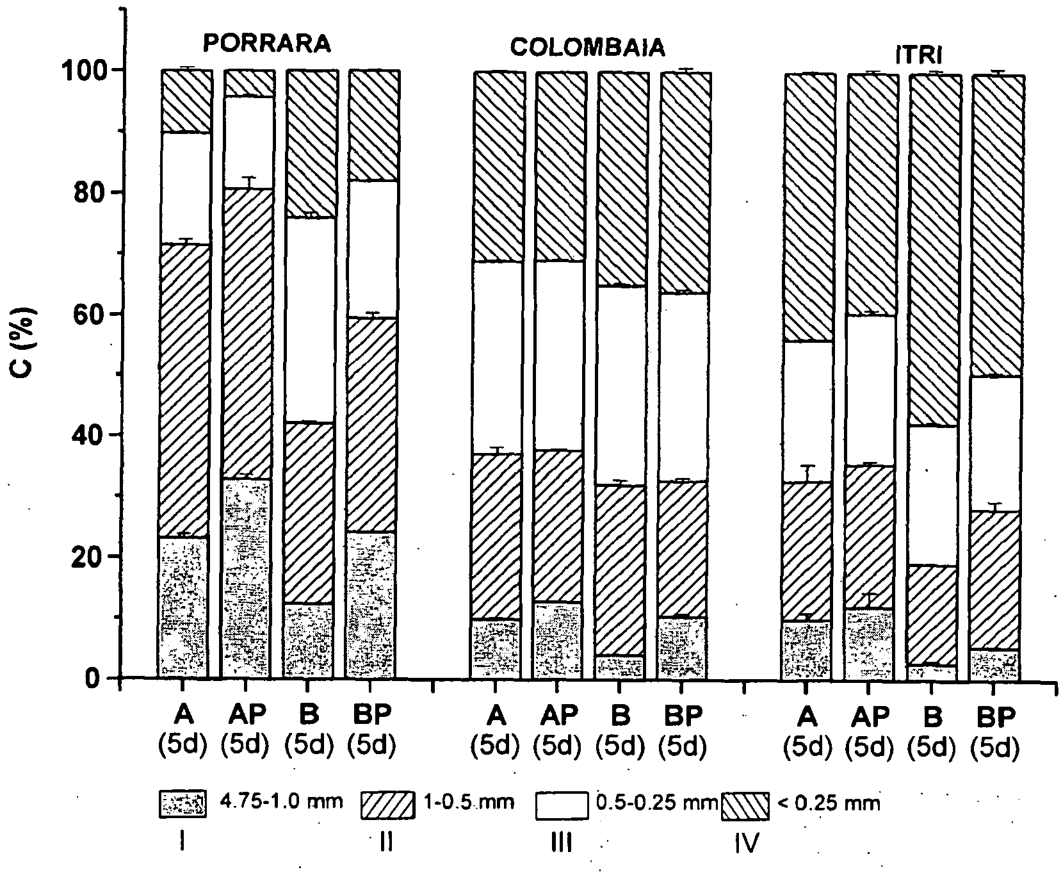
PORRARA
COLOMBAIA
ITRI
C (%)
0
20
40
60
80
100
A (5d)
AP (5d)
B (5d)
BP (5d)
4.75-1.0 mm
1-0.5 mm
0.5-0.25 mm
< 0.25 mm
I
II
III
IV

Fig. 2

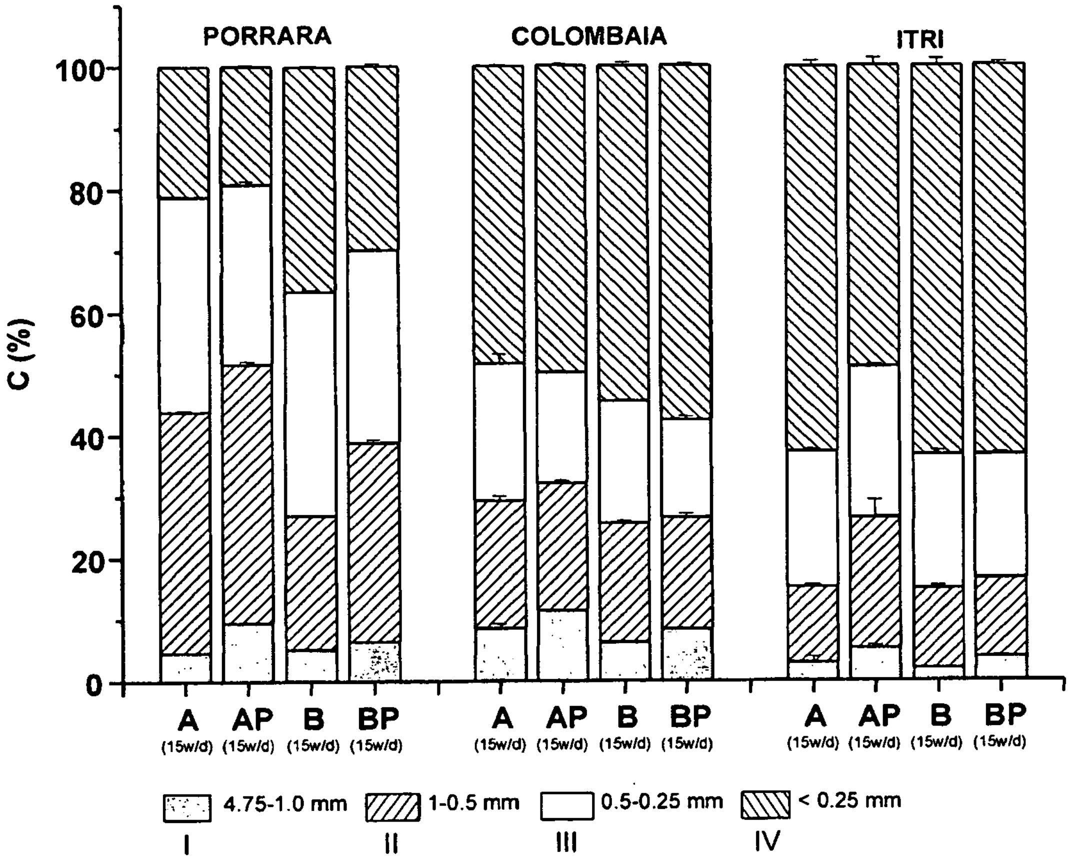
PORRARA
COLOMBAIA
ITRI
C (%)
0
20
40
60
80
100
A AP B BP
(15w/d) (15w/d) (15w/d) (15w/d)
A AP B BP
(15w/d) (15w/d) (15w/d) (15w/d)
A AP B BP
(15w/d) (15w/d) (15w/d) (15w/d)
4.75-1.0 mm
1-0.5 mm
0.5-0.25 mm
< 0.25 mm
I
II
III
IV

Fig. 3

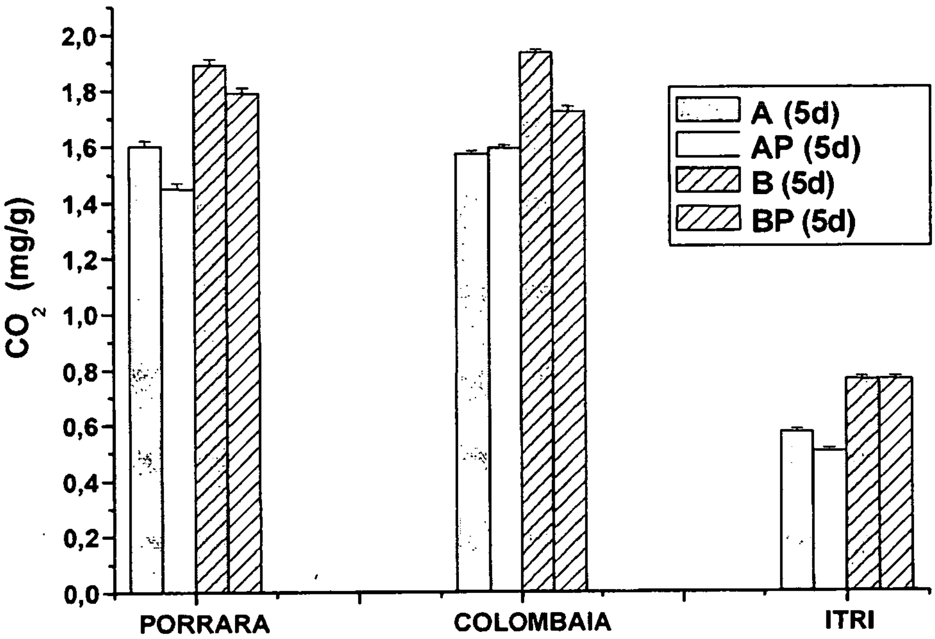
2,0
1,8
1,6
1,4
1,2
1,0
0,8
0,6
0,4
0,2
0,0
$CO_2$ (mg/g)
A (5d)
AP (5d)
B (5d)
BP (5d)
PORRARA
COLOMBAIA
ITRI

Fig. 4

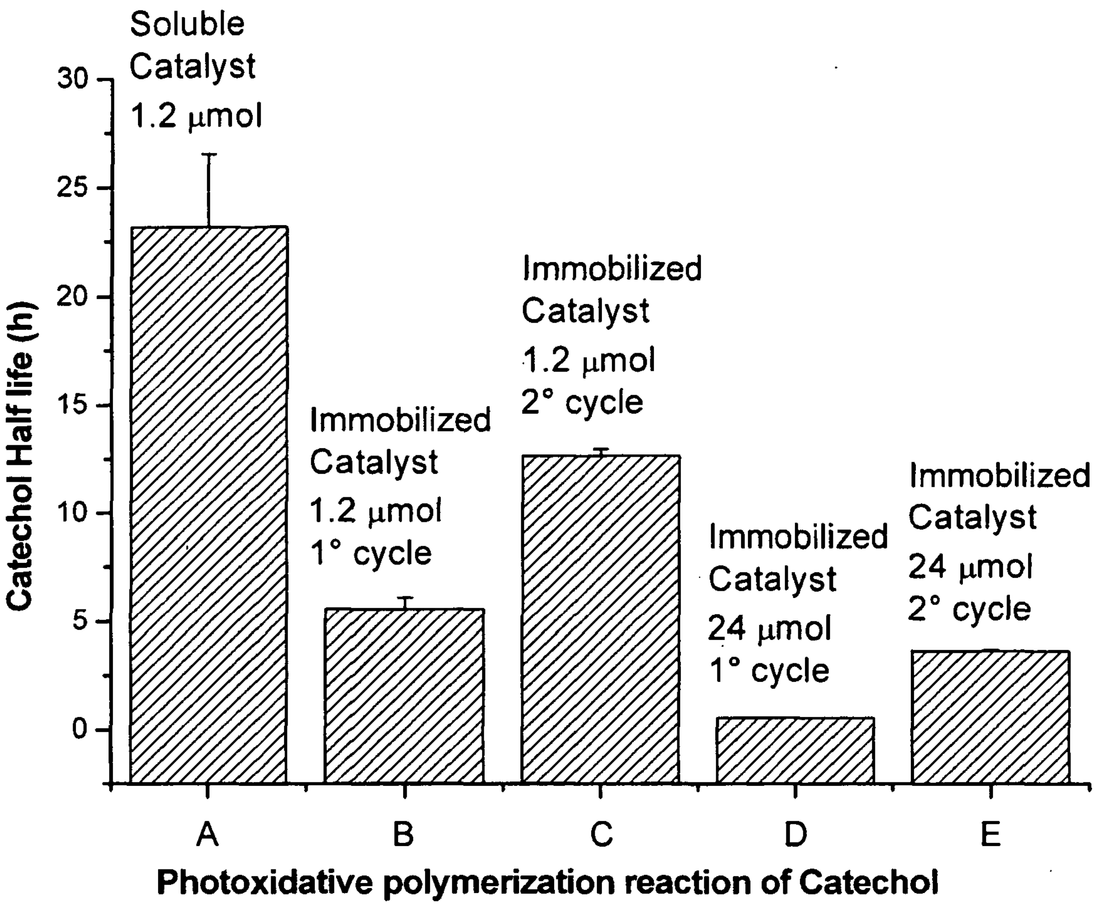
Soluble
Catalyst
1.2 µmol
Immobilized
Catalyst
1.2 µmol
1° cycle
Immobilized
Catalyst
1.2 µmol
2° cycle
Immobilized
Catalyst
24 µmol
1° cycle
Immobilized
Catalyst
24 µmol
2° cycle
Catechol Half life (h)
30
25
20
15
10
5
0
A
B
C
D
E
Photoxidative polymerization reaction of Catechol

Fig. 5

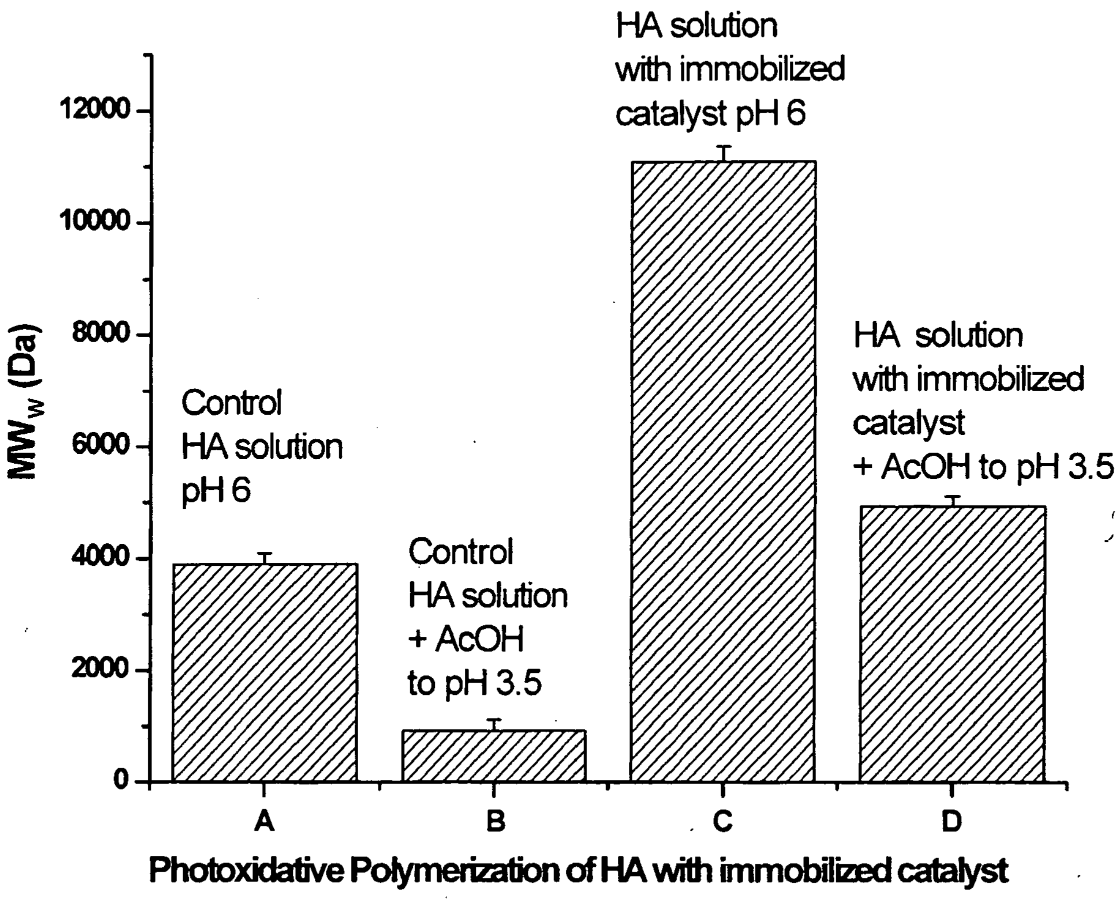
HA solution
with immobilized
catalyst pH 6
HA solution
with immobilized
catalyst
+ AcOH to pH 3.5
Control
HA solution
pH 6
Control
HA solution
+ AcOH
to pH 3.5
12000
10000
8000
6000
4000
2000
0
$MW_w$ (Da)
A
B
C
D
Photoxidative Polymerization of HA with immobilized catalyst

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003145127 A
- WO 03068324 A


### Non-patent literature cited in the description


- **R.A. SHELDON.** Metalloporphyrins in Catalytic Oxidation. Marcel Dekker, 1994, 1-27
- **MEUNIER ; SOROKIN.** *Acc. Chem. Res.,* 1997, vol. 30, 470-476
- **GUO-YU JIANG et al.** *Physical Chemistry Chemical Physics,* 2010, vol. 12, 12229-12236
- **WAHLEN et al.** *Adv. Synth. Catal.,* 2004, vol. 346, 152
- **PICCOLO .A.** *Soil Science,* 2001, vol. 166, 810-833
- **PICCOLO A.** *Advances in Agronomy,* 2002, vol. 75, 57-134
- **PICCOLO et al.** *Environmental Science and Technology,* 2002, vol. 36, 76-84
- **SMEJKALOVA, D. ; PICCOLO A.** *Environmental Science and Technology,* 2008, vol. 42, 699-706
- **PICCOLO et al.** *European Journal of Soil Science,* 1999, vol. 50, 1-8
- **CONTE et al.** *Environmental Science and Technology,* 1999, vol. 33, 1682-1690
- **PICCOLO et al.** *Soil Science,* 2001, vol. 166, 174-185
- **TRAYLOR P. S. et al.** *J. Chem. Soc. Chem. Commun.,* 1984, 279-280